# EUROPÄISCHE PATENTANMELDUNG

(11) **EP 2 924 833 A2**
(43) Veröffentlichungstag der Anmeldung: **30.09.2015**
(21) Anmeldenummer: 15305424.2
(22) Anmeldetag: 24.03.2015
(51) Int. Cl.: H02G 3/18

(54) **Elektrische Diffusionsvorrichtung**

(30) Priorität: 28.03.2014 DE 102014104385
(71) Anmelder: Berker GmbH & Co. KG, 58579 Schalksmühle (DE)
(72) Erfinder: Kirk, Anne, 58579 SCHALKSMÜHLE (DE)
(74) Vertreter: Nuss, Laurent

(57) **Zusammenfassung**

Die vorliegende Erfindung betrifft eine elektrische Vorrichtung zur aktiven Diffusion einer flüchtigen oder verdampfbaren Substanz in die Umgebung, insbesondere einer parfümierenden, einer luftreinigenden oder einer gesundheitsfördernden Substanz, wobei die Vorrichtung insbesondere Mittel zur kontrollierten Verdampfung der Substanz, Mittel zum Aufnehmen der Substanz, Mittel zur Luftzirkulationsförderung und Mittel zur Steuerung der Vorrichtung beinhaltet.

Vorrichtung (1), dadurch gekennzeichnet, dass insbesondere die vorgenannten Mittel in einem Gehäuse (6) untergebracht sind und mit diesem ein funktionelles und strukturelles Diffusionsmodul (7) bilden, welches zusammen mit einem unterliegenden elektrischen Leistungsmodul (8), das mit dem Netzwerk verbunden ist und für das Diffusionsmodul (7) eine Kleinspannungsversorgung bereitstellt, direkt in eine Unterputzdose (9) verbaut bzw. eingebaut ist.

## Beschreibung

Die vorliegende Erfindung betrifft das Feld der Komfortgeräte und Ausstattungen für z. B. Wohn-, Sanitär-, Dienst-, Freizeit- und Arbeitsräume, insbesondere in Bezug auf deren Luftqualität, Geruchsmerkmale und empfundene Eindrücke für die anwesenden Personen.

Im Stand der Technik sind schon viele Geräte und Vorrichtungen bekannt, welche die Umgebung eines Raumes beeinflussen können, darunter auch sogenannte Duft-, Aroma- und ätherische Ölspender.

Im Markt sind insbesondere viele Arten von Duftspendern bekannt, die auf unterschiedlichen Wirkprinzipien wie z.B. Zerstäuben, Verdampfen, Verflüchtigen, Verdunsten basieren. Diese marktüblichen Duftspender sind üblicherweise Geräte oder Behälter, die in den Räumen (z.B. auf Möbeln) abgestellt oder aufgehängt werden.

Der Stand der Technik bei den Duftspendern mit Verdampfungs-Prinzip weist im Wesentlichen Geräte auf, die über Einstecken in eine herkömmliche Steckdose, in eine USB-Steckdose, eine Steckdose im KFZ oder mit Batterien mit Strom versorgt werden. Hersteller in diesem Bereich sind z.B. die Firma @ aroma GmbH oder die Firma AirWick.

Ziel der Erfindung ist es eine Vorrichtung der vorgenannten Art dahingehend zu verbessern, dass ein Aufstellen auf Möbeln oder eine Anbringung an einer Wand nicht mehr erforderlich ist, dass die Stromversorgung nicht erreichbar und nicht ersichtlich ist und, dass die Vorrichtung Teil einer wandintegrierten Installationsproduktlinie sein kann.

Demzufolge betrifft die Erfindung eine elektrische Vorrichtung zur aktiven Diffusion einer flüchtigen oder verdampfbaren Substanz in die Umgebung, insbesondere einer parfümierenden, einer luftreinigenden oder einer gesundheitsfördernden Substanz, wobei die Vorrichtung insbesondere Mittel zur kontrollierten Verdampfung der Substanz, Mittel zum Aufnehmen der Substanz, Mittel zur Luftzirkulationsförderung und Mittel zur Steuerung der Vorrichtung beinhaltet,

Vorrichtung, dadurch gekennzeichnet, dass insbesondere die vorgenannten Mittel in einem Gehäuse untergebracht sind und mit diesem ein funktionelles und strukturelles Diffusionsmodul bilden, welches zusammen mit einem unterliegenden elektrischen Leistungsmodul, das mit dem Netzwerk verbunden ist und für das Diffusionsmodul eine Kleinspannungsversorgung bereitstellt, direkt in eine Unterputzdose verbaut bzw. eingebaut ist.

Die Erfindung wird hierunter an Hand von Ausführungsbeispielen und im Zusammenhang mit weiteren Merkmalen näher erläutert, dies im Zusammenhang mit den anliegenden Zeichnungen, in denen:
Figur 1 eine Explosionsdarstellung der erfindungsgemäßen Vorrichtung zeigt;
Figur 2 eine Explosionsdarstellung des Diffusionsmoduls der Vorrichtung der Figur 1 zeigt;
Figur 3 eine perspektivistische Darstellung eines Diffusionsmoduls mit dekorativem Rahmen zeigt, gemäß einer alternativen Ausführungsform der Erfindung mit auswechselbarer Substanzkartusche, und,
Figur 4A und 4B sind Rück- und Frontansichten der Kartusche der Figur 3.

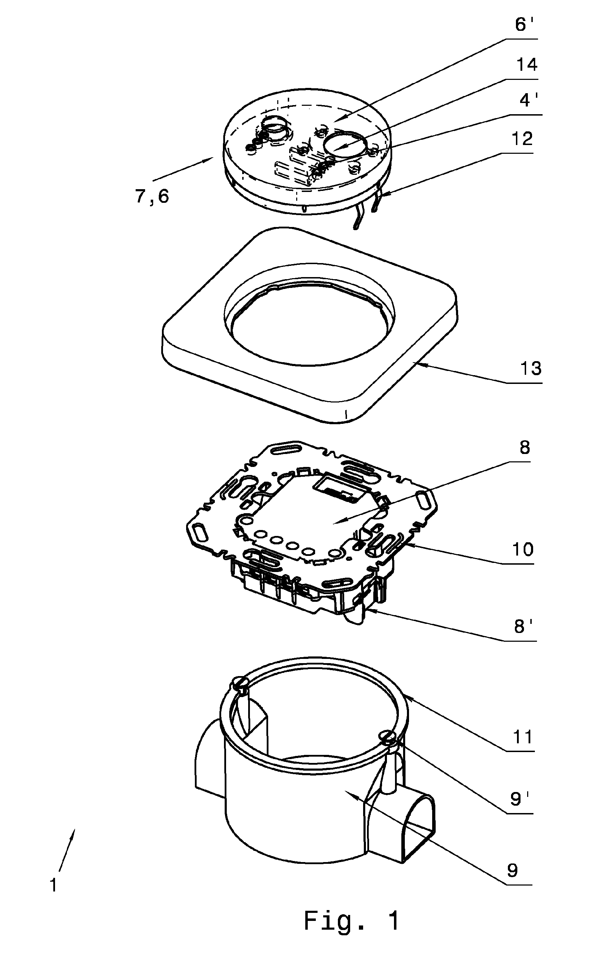

Die anliegenden Figuren 1 bis 3 zeigen eine elektrische Vorrichtung 1 zur aktiven Diffusion in die Umgebung einer flüchtigen oder verdampfbaren Substanz, insbesondere einer parfümierenden, einer luftreinigenden oder einer gesundheitsfördernden Substanz, wobei diese Vorrichtung 1 insbesondere Mittel 2 zur kontrollierten Verdampfung der Substanz, Mittel 3 zum Aufnehmen der Substanz, Mittel 4 zur Luftzirkulationsförderung und Mittel 5 zur Steuerung der Vorrichtung beinhaltet.

Gemäß der Erfindung sind insbesondere die vorgenannten Mittel 2 bis 5 in einem Gehäuse 6 untergebracht und bilden mit diesem ein funktionelles und strukturelles Diffusionsmodul 7 , welches zusammen mit einem unterliegenden elektrischen Leistungsmodul 8, das mit dem Netzwerk verbunden ist und für das Diffusionsmodul 7 eine Kleinspannungsversorgung bereitstellt, direkt in eine Unterputzdose 9 verbaut bzw. eingebaut ist.

Das Gehäuse 6 kann zum Beispiel aus einem oberen frontalen sichtbaren Deckelteil 6' und einem unteren plattenartigen Bodenteil 6" bestehen.

Vorteilhafterweise ist das Diffusionsmodul 7 lösbar auf dem Leistungsmodul 8 montiert, vorzugsweise durch Aufstecken mit zugleicher Erstellung mechanischer und elektrischer Verbindungen.

In Übereinstimmung mit einer möglichen konstruktiven Lösung der Erfindung, ist das Leistungsmodul 8 mit einer ringförmigen Tragplatte 10 ausgestattet, welche als Montageadapter gegenüber dem Diffusionsmodul 7 und der Unterputzdose 9 fungiert, wobei diese Tragplatte 10 auf dem Rand 11 der Öffnung der Dose 9 aufliegt und mit diesem verbunden ist.

Insbesondere kann das Leistungsmodul 8 aus einem sogenannten "Power-Modul" bestehen, welches vom Anmelder als Artikelnummer 88 22 11 00 im Programm BERKER .Net vorhanden ist.

Die Verbindung zwischen Leistungsmodul 8 und Dose 9 ist, zum einen, durch Dosenschrauben 9' über die Tragplatte 10 und, zum anderen, durch Speizkrallen 8' über das Gehäuse des Leistungsmoduls 8 hergestellt.

Wie dies aus der Figur 1 hervorgeht, kann das Diffusionsmodul 7 über geeignete Montageelemente 12 mit der Tragplatte 10 mechanisch verbindbar sein, wobei diese Monteageelemente 12 vorzugsweise als Federelemente ausgebildet sind und auch zur lösbaren Befestigung eines sich um das Diffusionsmodul 7 erstreckenden dekorativen Rahmens 13 dienen können.

Erfindungsgemäß erstreckt sich die Tragplatte 10 über den Rand 11 radial hinaus und kann somit auf der Wandoberfläche aufliegen.

Weiterhin kann vorgesehen sein, dass der aufgesetzte dekorative Rahmen 13 eine Form und Abmessungen aufweist die mit denen einer Installationsproduktlinie übereinstimmen, wobei die außenseitige Vorderwand des Deckelteils 6' des scheibenförmigen Gehäuses 6 nur geringfügig über den Rahmen 13 herausragt, und ggf. randseitig Lufteinfuhrsöffnungen 6'" aufweist. Ferner kann der Rand des Deckelteils 6' auch Griffzonen aufweisen.

Die aktive Substanz kann unterschiedliche Konsistenzen aufweisen, und z. B. eine Flüssigkeit, ein Gel, ein Wachs sein und der Träger 3 kann dementsprechend verschieden sein, wie auch das Verdampfungsmittel 2.

Um eine einfache Benutzung und Wartung zu gewährleisten, kann das Gehäuse 6 des Diffusionsmoduls 7 Mittel aufweisen zum einfachen Auswechseln oder Austauschen des Trägers 3 zum Aufnehmen der zu verflüchtigenden oder zu verdampfenden Substanz.

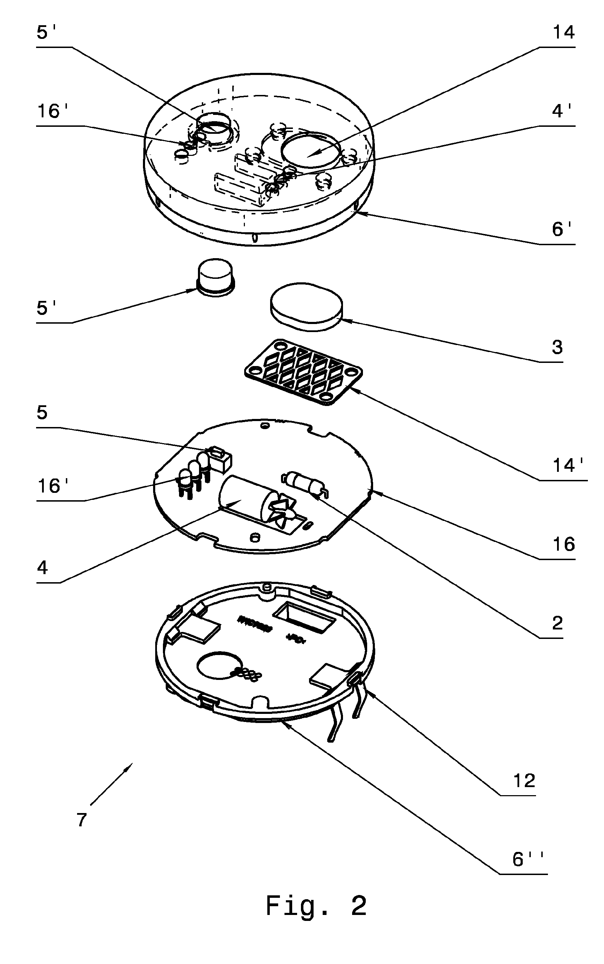

Wie aus den Figuren 1 und 2 hervorgeht, und im Einklang mit einer ersten Variante, kann die Erfindung vorsehen, dass der Substanzträger 3 aus einem Faser- oder Schaumteil besteht, welches über dem elektrischen Verdampfungsmittel 2 und hinter einem nach Außen offenen Teil des Gehäuses 6 angeordnet ist, wie zum Beispiel eine mit einem herausnehmbaren oder abnehmbaren Gitter 14' ausgestatteten Öffnung 14 des außenseitigen Deckelteils 6' des Gehäuses 6.

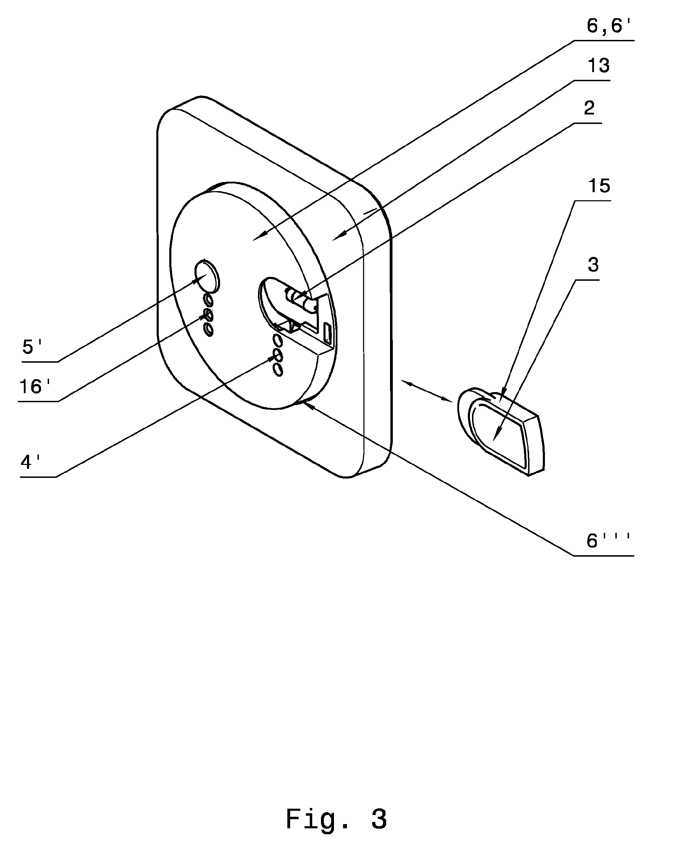

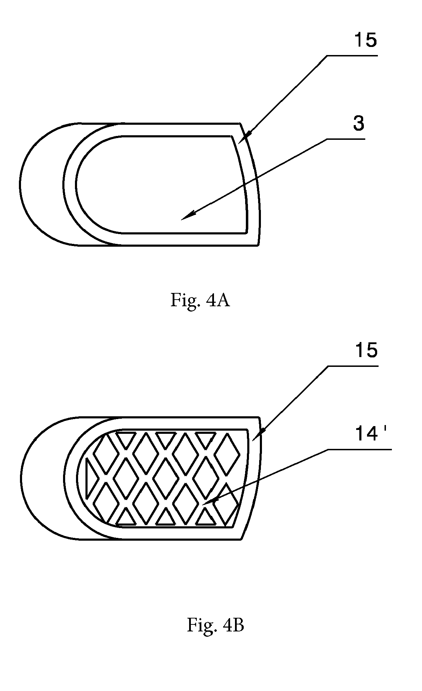

Gemäß einer alternativen Konstruktion, die in den Figuren 3 und 4 gezeigt ist, kann auch vorgesehen werden, dass das Gehäuse 6 einen als Schieber ein- und ausführbaren Rahmen oder ähnlichen beweglichen Träger 15 aufweist, welcher zur Aufnahme des Substanzträgers 3 geeignet ist und welcher in eingefahrener Stellung diesen Substanzträger 3 über oder auf dem elektrischen Verdampfungsmittel 2 positioniert.

Dieser Träger 15 kann als separates und einsteckbares Teil vorgesehen werden und in einem komplementären Ausschnitt des Gehäuses 6 aufgenommen werden (gegebenenfalls mit elastischer Verriegelung oder Reibschluss).

Im Hinblick auf die Funktionsweise der Vorrichtung 1 kann die Ansteuerung der Verdampfungsmittel 2 und der Luftzirkulationsförderungsmittel 4 auf eine oder mehrere der folgenden Weisen erfolgen: Ansteuerung durch Knopfdruck 5; Ansteuerung durch Zeitverlauf und/oder Zeitprogrammierung; Ansteuerung durch Bewegungs- oder Anwesenheitserfassung; manuelle Fernsteuerung; automatische Fernsteuerung, zum Beispiel nach Bewertung einer Luftgütemessung.

Vorzugsweise beinhaltet die Vorrichtung 1 eine Leiterplatte 16 auf der die verschiedenen funktionellen Komponenten aufgebaut sind, nämlich: ein Mikroschalter 5 mit Betätigungsknopf 5', ein Heizwiderstand als Verdampfungsmittel 2, ein kleiner Lüfter als Luftzirkulationsförderungsmittel 4, sowie Status-LEDs 16'.

Selbstverständlich sind auch Sicherheitskomponenten vorgesehen und ggfl. zusätzliche elektronische Steuerungs- und/oder Kommunikationsmittel, abgängig von der Art der Ansteuerung.

Die Vorrichtung 1 kann z. B. wie folgt funktionieren:

Der Heizwiderstand 2 wird je nach Betätigung des Mikroschalters 5 in unterschiedlichen Stufen mittels der Elektronik aufgeheizt. Die Wärme wird über das Lochgitter 14' an den Duftstoffträger 3 weitergeleitet, sodass der Duftstoff verdampft.

Mittels Betätigungsknopf 5' wird der Mikroschalter 5 betätigt. Es sind verschiedene Stufen schaltbar, die unterschiedlichen Wärmegraden des Heizwiderstandes 2 und damit Duftstärken entsprechen. Die einzelnen Schaltstufen werden durch unterschiedlich farbige Status-LEDs 16' signalisiert. Ab Schaltstufe 2 z. B. schaltet sich ein Lüfter 4 hinzu, der den Duftaustritt erhöht. Aus diesem Grunde können im Deckelteil 6' unterhalb des Durchbruchs 14 für den Duftstoffträger 3 Durchbrüche 4' angeordnet sein, die im Zusammenbau direkt über dem Lüfterrad angeordnet sind.

Obwohl nicht dargestellt, kann die Erfindung in einer Weiterbildung auch noch vorsehen, dass das Gehäuse 6 oder das Leistungsmodul 8 einen Vorratstank für eine zu verflüchtigende oder zu verdampfende Substanz und entsprechende Förderungsmittel aufweist, um die Substanz über die Zeit zu einem geeigneten Substanzträger 3 zu leiten und, dass im Gehäuse 6 Mittel zum Richten und ggf. zum Kanalisieren des Luftstroms der Luftzirkulationsförderungsmittel 4 vorgesehen sind.

Selbstverständlich ist die Erfindung nicht auf die beschriebenen und dargestellten Ausführungsformen begrenzt. Änderungen, z. B. in den Ausführungsformen der verschiedenen Bestandteile oder Ersetzungen durch technische Äquivalente sind, soweit sie im Rahmen des beanspruchten Schutzbegehrens bleiben, jederzeit möglich.

## Patentansprüche

1. Elektrische Vorrichtung zur aktiven Diffusion in die Umgebung einer flüchtigen oder verdampfbaren Substanz, insbesondere einer parfümierenden, einer luftreinigenden oder einer gesundheitsfördernden Substanz, wobei die Vorrichtung insbesondere Mittel zur kontrollierten Verdampfung der Substanz, Mittel zum Aufnehmen der Substanz, Mittel zur Luftzirkulationsförderung und Mittel zur Steuerung der Vorrichtung beinhaltet,
Vorrichtung (1), **dadurch gekennzeichnet, dass** insbesondere die vorgenannten Mittel (2 bis 5) in einem Gehäuse (6) untergebracht sind und mit diesem ein funktionelles und strukturelles Diffusionsmodul (7) bilden, welches zusammen mit einem unterliegenden elektrischen Leistungsmodul (8), das mit dem Netzwerk verbunden ist und für das Diffusionsmodul (7) eine Kleinspannungsversorgung bereitstellt, direkt in eine Unterputzdose (9) verbaut bzw. eingebaut ist.

2. Elektrische Diffusionsvorrichtung gemäß Anspruch 1, **dadurch gekennzeichnet, dass** das Diffusionsmodul (7) lösbar auf dem Leistungsmodul (8) montiert ist, vorzugsweise durch Aufstecken mit zugleich mechanischer und elektrischer Verbindung.

3. Elektrische Diffusionsvorrichtung gemäß Anspruch 1 oder 2, **dadurch gekennzeichnet, dass** das Leistungsmodul (8) mit einer ringförmigen Tragplatte (10) ausgestattet ist, welche als Montageadapter gegenüber dem Diffusionsmodul (7) und der Unterputzdose (9) fungiert, wobei diese Tragplatte (10) auf dem Rand (11) der Öffnung der Dose (9) aufliegt und mit diesem verbunden ist.

4. Elektrische Diffusionsvorrichtung gemäß Anspruch 3, **dadurch gekennzeichnet, dass** das Diffusionsmodul (7) über geeignete Montageelemente (12) mit der Tragplatte (10) mechanisch verbindbar ist, wobei diese Montageelemente (12) vorzugsweise als Federelemente ausgebildet sind und auch zur lösbaren Befestigung eines sich um das Diffusionsmodul (7) erstreckenden dekorativen Rahmens (13) dienen können.

5. Elektrische Diffusionsvorrichtung gemäß Anspruch 4, **dadurch gekennzeichnet, dass** sich die Tragplatte (10) über den Rand (11) der Öffnung der Unterputzdose (9) radial hinaus erstreckt und, dass der aufgesetzte dekorative Rahmen (13) eine Form und Abmessungen aufweist die mit denen einer Installationsproduktlinie übereinstimmen, wobei die außenseitige Vorderwand eines Deckelteils (6') des scheibenförmigen Gehäuses (6) nur geringfügig über den Rahmen (13) herausragt, und ggf. randseitig Lufteinfuhrsöffnungen (6"') aufweist.

6. Elektrische Diffusionsvorrichtung gemäß einem der Ansprüche 1 bis 5, **dadurch gekennzeichnet, dass** das Gehäuse (6) des Diffusionsmoduls (7) Mittel aufweist zum einfachen Auswechseln oder Austauschen des Trägers (3) zum Aufnehmen der zu verflüchtigenden oder zu verdampfenden Substanz.

7. Elektrische Diffusionsvorrichtung gemäß Anspruch 6, **dadurch gekennzeichnet, dass** der Substanzträger (3) aus einem Faser- oder Schaumteil besteht, welches über dem elektrischen Verdampfungsmittel (2) und hinter einem nach Außen offenen Teil des Gehäuses (6) angeordnet ist, wie zum Beispiel eine mit einem herausnehmbaren oder abnehmbaren Gitter (14') ausgestatteten Öffnung (14) des außenseitigen Deckelteils des Gehäuses (6).

8. Elektrische Diffusionsvorrichtung gemäß Anspruch 6, **dadurch gekennzeichnet, dass** das Gehäuse (6) einen als Schieber ein- und ausführbaren Rahmen oder ähnlichen beweglichen Träger (15) aufweist, welcher zur Aufnahme des Substanzträgers (3) geeignet ist und welcher in eingefahrener Stellung diesen Substanzträger (3) über oder auf dem elektrischen Verdampfungsmittel (2) positioniert.

9. Elektrische Diffusionsvorrichtung gemäß einem der Ansprüche 1 bis 8, **dadurch gekennzeichnet, dass** die Ansteuerung der Verdampfungsmittel (2) und der Luftzirkulationsförderungsmittel (4) auf eine oder mehrere der folgenden Weisen erfolgen kann: Ansteuerung durch Knopfdruck (5); Ansteuerung durch Zeitverlauf und/oder Zeitprogrammierung; Ansteuerung durch Bewegungs- oder Anwesenheitserfassung; manuelle Fernsteuerung; automatische Fernsteuerung, zum Beispiel nach Bewertung einer Luftgütemessung.

10. Elektrische Diffusionsvorrichtung gemäß einem der Ansprüche 1 bis 9, **dadurch gekennzeichnet, dass** das Gehäuse (6) oder das Leistungsmodul (8) einen Vorratstank für eine zu verflüchtigende oder zu verdampfende Substanz und entsprechende Förderungsmittel aufweist, um die Substanz über die Zeit zu einem geeigneten Substanzträger (3) zu leiten und, dass im Gehäuse (6) Mittel zum Richten und ggf. zum Kanalisieren des Luftstroms der Luftzirkulationsförderungsmittel (4) vorgesehen sind.
